# EUROPEAN PATENT SPECIFICATION

(11) **EP 0 267 290 B1**
(45) Date of publication and mention of the grant of the patent: **01.12.1993**
(21) Application number: 87902720.9
(22) Date of filing: 10.04.1987
(51) Int. Cl.: A01C 11/02

(54) **APPARATUS FOR TRANSPLANTING**
ANORDNUNG FÜR TRANSPLANTIERUNG
APPAREIL DE TRANSPLANTATION

(30) Priority: 10.04.1986 JP 83773/86; 25.08.1986 JP 199843/86; 25.08.1986 JP 199844/86; 25.08.1986 JP 199845/86; 27.11.1986 JP 283601/86
(43) Date of publication of application: 18.05.1988
(73) Proprietor: ISEKI & CO., LTD., Matsuyama-shi Ehime-ken (JP)
(72) Inventor: KINOSHITA, Eiichiro, Tobe-cho, Iyo-gun Ehime 791-11 (JP); ASANO, Shiro Isekinoki Kabushiki Kaisha Gijutsubu, Ehime 791-11 (JP); KUBO, Tamaki Isekinoki Kabushiki Kaisha Gijutsubu, Ehime 791-11 (JP)
(74) Representative: Tiedtke, Harro, Dipl.-Ing.
(86) International application number: JP8700229
(87) International publication number: WO8706093

(56) References cited:
- FR-A- 2 356 351
- FR-A- 2 476 970
- GB-A- 205 825
- JP-A- 615 710
- JP-A-60 145 011
- JP-U- 596 425
- US-A- 3 561 614

## Description

This invention relates to an apparatus for transplanting seedlings according to the preamble of patent claim 1.

A conventional transplanting equipment was structured, as disclosed in the Japanese Examined Patent Publication Sho. 49-17806, and the Japanese Unexamined Patent Publication Sho. 60-66907 or Sho. 61-5712, in such a way that a transplanting tool was installed on the side of the front end of a single rotary case so that a transplanting claw of the transplanting tool might draw a long loop-shaped transplanting trajectory in the vertical direction as seen from the side.

In said conventional transplanting equipment, the transplanting trajectory drawn by the transplanting claw of the transplanting tool was short in the longitudinal direction so that it could not be stretched in the vertical direction, and if attempted to extend in the vertical direction, the longitudinal distance increased and the transplanting machine length became longer, which prevented the transplanting equipment from becoming compact. Besides, as the transplanting trajectory became long in the longitudinal direction, the transplanting claw moved back and forth longer under the soil surface in transplanting, so that the transplanted position of the seedlings were influenced and impaired.

From the US-PS 3 561 614 an article transfer apparatus is known with which an article can be moved linearly in a plane.

It is the object of the invention to provide an apparatus for transplanting seedlings being compact in longitudinal direction and allowing an extended movement of the transplanting tool in the vertical direction.

This problem is solved by an apparatus for transplanting seedlings having the features of patent claim 1.

According to the invention, a second rotary case rotates reversely with regard to the rotation of a first rotary case, and as seen from the side, these two cases are linked in the vertical direction to be extended vertically, and are contracted as a whole in the longitudinal direction because they overlap with each other. As a result, the loop-shaped transplanting trajectory drawn by the transplanting claw of the transplanting tool can be shortened longitudinally and extended in the vertical direction. Accordingly, seedlings can be surely divided from a seedling table installed even in a fairly high position and be transplanted in a preferable position without being stretched back and forth by the soil surface beneath.

Preferred embodiments of the invention are described below with reference to the drawings in which:

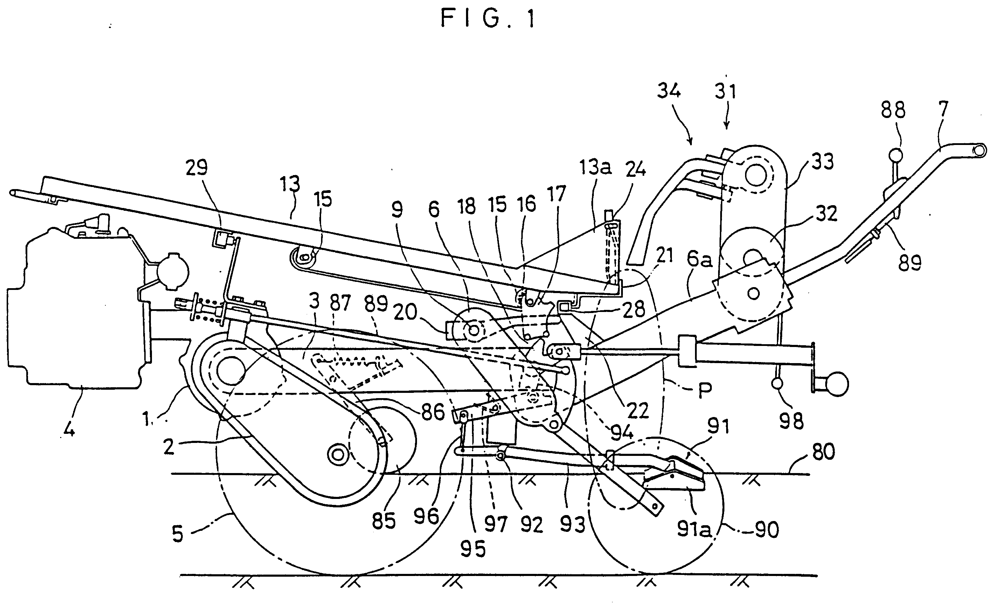

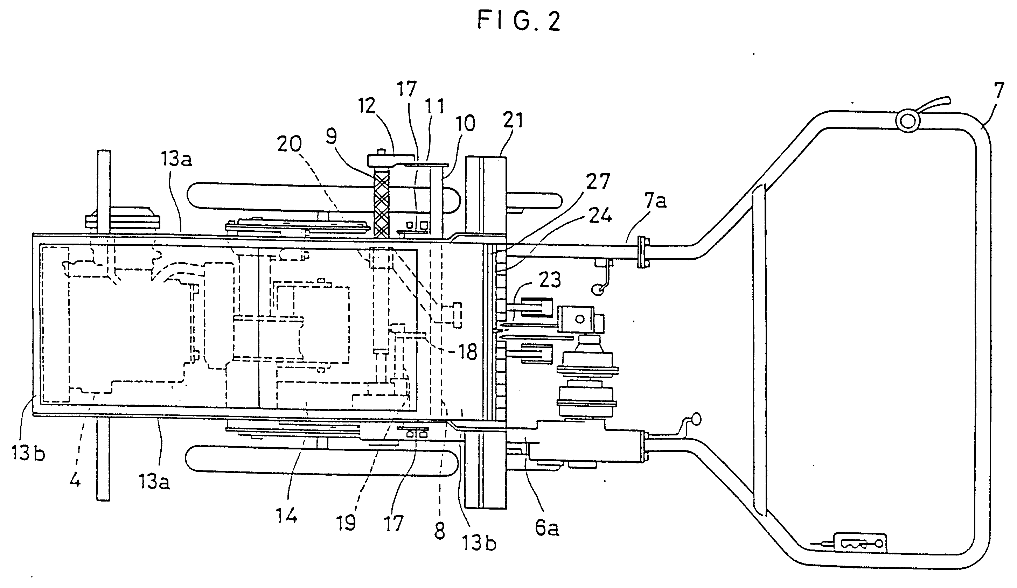

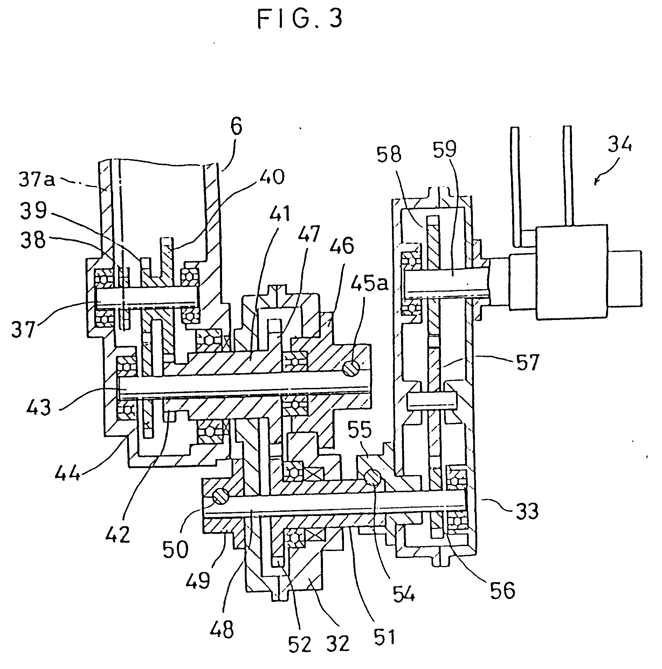

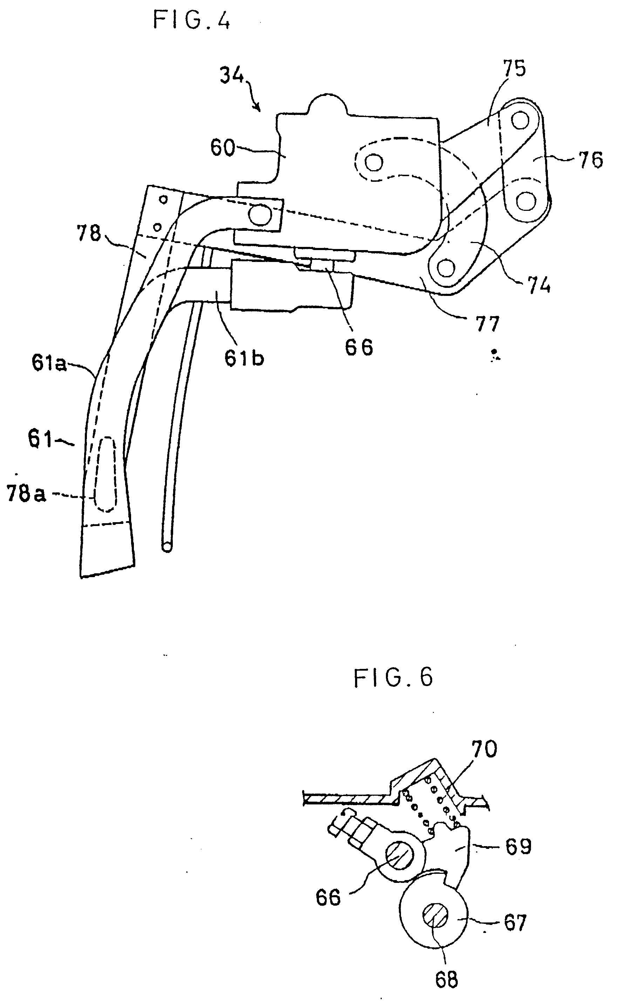

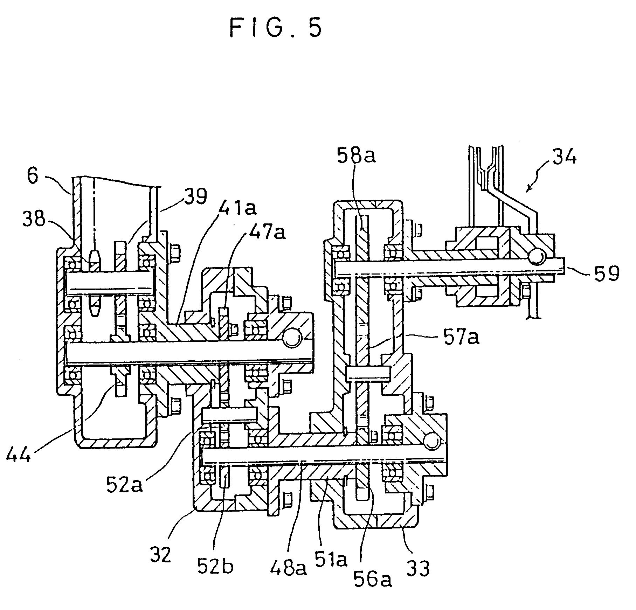

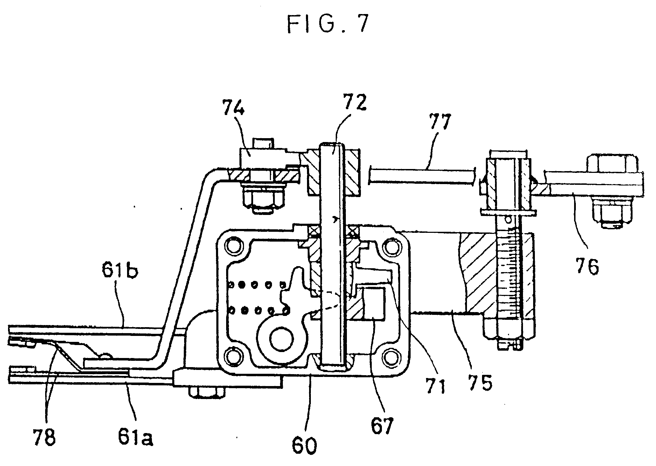

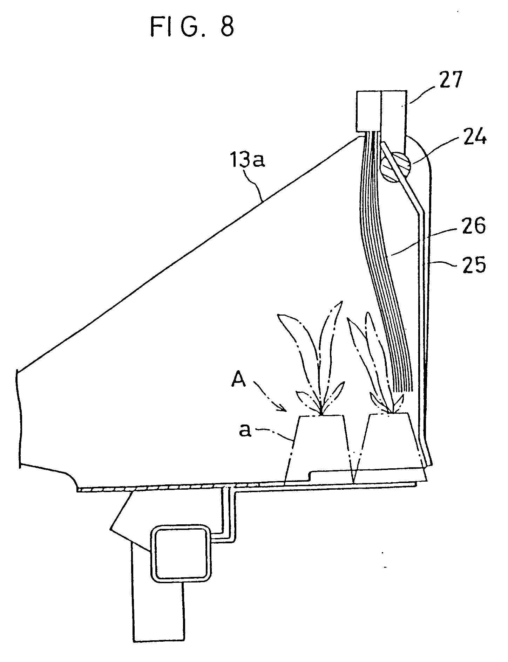

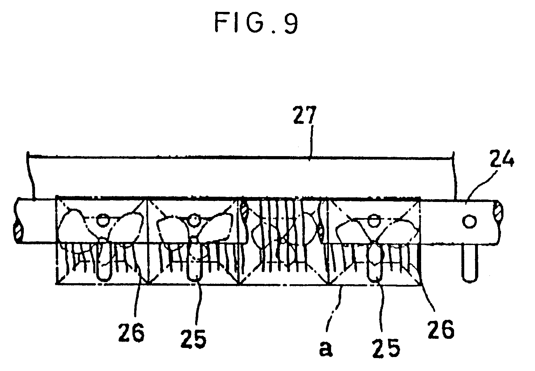

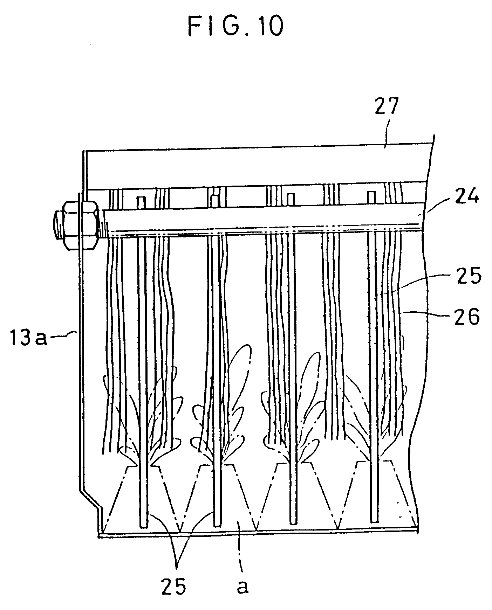

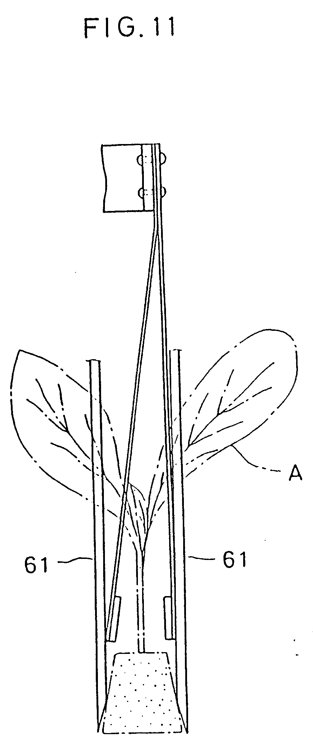

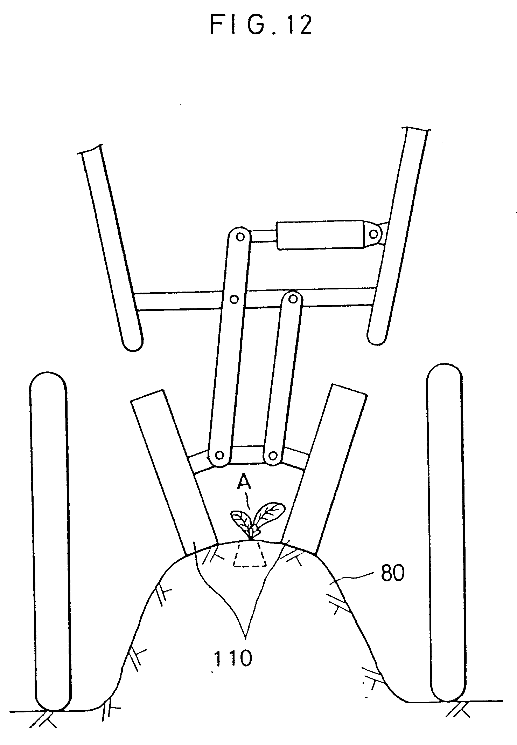

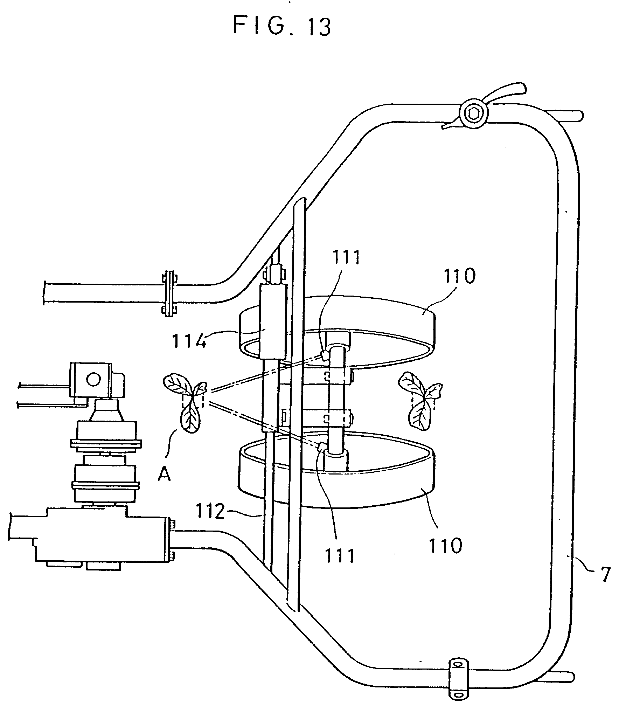

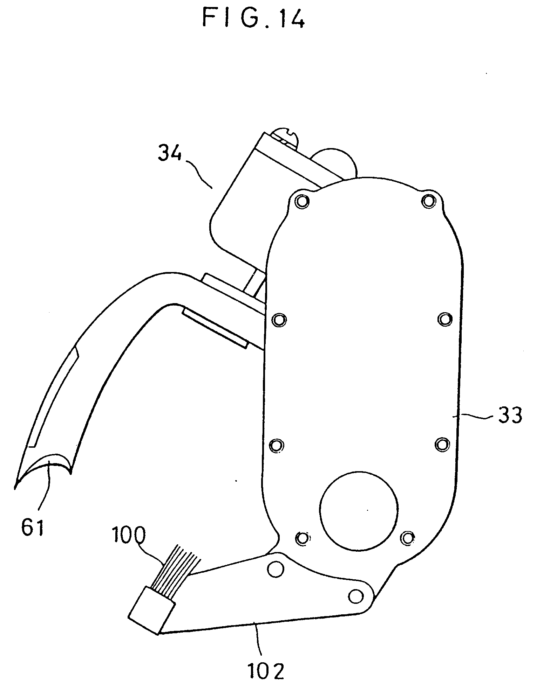

Fig. 1 is a side elevation showing a preferable embodiment of this invention, Fig. 2 is its plan, Fig. 3 is a sectional view showing a transmission mechanism, Fig. 4 is an appearance drawing of the transplanting tool, Fig. 5 is a sectional view showing a transmission mechanism in another embodiment, Fig. 6 is an explanatory drawing of an opening device of a transplanting claw, Fig. 7 is a plan of seedling press-down mechanism, Fig. 8, Fig. 9 and Fig. 10 are a side elevation, plan and rear view of the rear part of the seedling table respectively, Fig. 11 is a front view of the transplanting claw, Fig. 12 and Fig. 13 are a rear view and a plan of root pressure ring respectively, and Fig. 14 is an explanatory drawing of a mud scraper.

An embodiment of this invention is explained in details by referring to the drawings hereafter.

Numeral 1 is a transmission gear case, on both right and left sides of which wheel transmission cases 2, 2 are mounted downward, and 3 is a transmission case installed backward in an intermediate part slightly at the left side.

4 is an engine, which is directly coupled to the forward side of said transmission gear case 1.

5, 5 show wheels.

6 is a transplanting transmission case, of which base part is attached outside the front end side of said transmission case 3, which is in a V-shape seen from the side and its case 6a on the rear side is extended long backward.

7 is a handle, which is used to link a handle support lever 7a of which base part is attached to the right side of said transmission gear case 1 and of which end part is extended upward in the back with said transmission case 6a in a loop shape.

8 is a reinforcement lever, which links said transplanting transmission case 6 and the handle support lever 7 with each other.

9 is a lead cam shaft, of which base end side penetrates in and is held in the front side of said transmission case 3 to be rotated, and of which front end side is supported rotatably by a metal 12 mounted through a fitting 11 on a support lever 10 which is integrally attached to said reinforcement lever 8.

13 is a seedling table, in which a seedling transfer belt 14 is stretched being wound in the longitudinal direction in the bottom plate space framed by right and left frames 13a and front and rear bottom plates 13b.

15 shows belt winding rolls.

The rear belt winding roll 15 is designed to be driven through a ratchet mechanism, and 17 denotes its driving levers mounted on the right and left side.

18 is a rotor, which is mounted integrally on a rotary shaft to drive said lead cam shaft 9.

20 is a lead metal inserted in said lead cam shaft 9 and equipped with a lead claw which is engaged with a lead groove of the lead cam shaft 9, and the lead metal 20 is affixed to the rear bottom plate 13b of said seedling table 13.

It is so designed that the seedling table 13 is reciprocally and lateraly moved from the left to the right by the rotation of the lead cam shaft 9 through the lead metal 20, and when the seedling table comes to the lateral end, the driving lever 17 is engaged with the rotor 18 to be rotated so as to rotate the belt winding roll through the ratchet mechanism 16.

21 is a seedling receiving frame, which is located on the rear end side of said seedling table 13 and is mounted on said transplanting transmission case 6a and the handle support lever 7a by a fitting 22. A seedling outlet 23 is installed on the middle part on each of both the right and the left sides of the seedling receiving frame.

24 is a horizontal shaft fixed to the standing frames 13a on the right and left, which is installed on the upper side of the seedling table on the side of the seedling supply outlet, and on the horizontal shaft 24, holes in the vertical direction are drilled with a certain interval, in which stopper levers 25, 25... to receive the intermediate part of pot a of pot seedling A are inserted and fixed.

26 is a brush, which is hung with its base side buried in a horizontal frame 27 fixed on the upper part of the standing frames 13a on the right and left of the seedling table on the side of the seedling supply outlet, which is positioned in front of said stopper levers 25, 25....

28, 29 denote support rails of the seedling table 13.

31 is a transplanting device comprising a first rotary case 32 which is attached to the driving shaft on the side of said transplanting transmission case 6 to be swung, a second rotary case 33 which is swung with its base part mounted outside the front end side of the first rotary case 32 reversely to the first rotary case 32 in a double speed of the first rotary case,and a transplanting tool 34 attached to the outer side of the second rotary case 33 on the front part.

37 is a driving shaft, which is mounted and borne rotatably inside the front end side of said transplanting transmission case 6, and on the driving shaft 37, a sprocket 38 receiving the power from the side of an engine 4 through a chain 37a, a gear 39 and a gear 40 are installed so as to be integrally rotated with the shaft.

41 is an outfitted shaft, which is borne rotatably on said transplanting transmission case 6, and a gear 42 meshing with said gear 40 is wedged in the outfitted shaft 41.

43 is a shaft inserted in said outfitted shaft 41, in the case of this drawing , which is installed so that its one end is supported rotatably on the inner wall at one side of the transplanting transmission case 6, and that the other end is projected from said outfitted shaft 41 on the outer side of the transplanting transmission case 6.

And to the shaft 43, a gear 44 meshing with said gear 39 is attached rotatably together with the shaft.

32 is a first rotary case, the inner part of which base side is penetrated by said shaft 43 from the side, and the outer side of which is mounted on the shaft 43 by a pin 45a through a metal 46.

47 is a gear integrally mounted on said outfitted shaft 41 and arranged in said first rotary case 32. 48 is a stationary shaft which penetrates the inner part on the front end side of said first rotary case and is affixed on the first rotary case 32 by a metal 49 and a pin 50 at the side thereof. 51 is a cylindrical shaft inserted in said stationary shaft 48, on the base end side of which a gear 52 meshing with said gear 47 is integrally mounted.

33 is a second rotary case, the outer side of which base side is fixed on said cylindrical shaft 51 by a pin 54 and a metal 55. Here, said fixed shaft 48 is inserted in the second rotary case 33.

56 denotes a gear affixed to the stationary shaft 48 in the second rotary case 33. 57 is a counter gear and 58 is a rotary gear of a transplanting tool mounting shaft 59. The transplanting tool mounting shaft 59 is projected outside the front end side of the second rotary case 33, to which a transplanting tool 34 is attached.

The transplanting tool 34 is composed in such a way that a transplanting fixed claw 61 comprising a transplanting fixed claw 61a and a transplanting movable claw 61b is installed in a hollow box-shaped main body of the transplanting tool and that the actuation mechanism of said transplanting movable claw 61b is installed in the transplanting tool main body.

A case 60 of the transplanting tool 34 is affixed to said transplanting tool mounting shaft 59 by fittings, keys, cotters, and pins.

Said transplanting movable claw 61b is attached to a vertical shaft 66 installed rotatably on said case 60, so that the spacing of the right and left can be extended or contracted freely with regard to the transplanting fixed claw 61a bolted to said case.

67 is an opening cam, which is integrally installed on an outfitted shaft 68 covering said transplanting tool mounting shaft 59, and the outfitted shaft 68 is integrally attached to said second rotary case 33.

69 is a cam follower which is affixed on said shaft 66 and press-fitted to said opening cam 67 by a spring 70 so that the shaft 66 is rotated by the rotation of the cam 67.

It is so designed that the rotation speed of the second rotary case 33 becomes exactly twice that of said first rotary case 32, and that the both rotary cases 32, 33 direct approximately to the vertical direction when the both rotary cases 32, 33 are fully extended linearly while the both rotary cases 32, 33 direct to the longitudinal direction when they are not in a straight line but in a bent shape.

The trajectory P drawn by the tip of the transplanting claw of the transplanting tool 34 is created in a closed loop shape narrower in the longitudinal direction and longer in the vertical direction.

The motion of the movable transplanting claw 61b is to rotate to the side of the fixed transplanting claw 61a against a spring 70 when the transplanting claw enters from above into the seedling outlet 23 of said seedling receiving frame to take out the seedlings, and after that to reach the lower end in that state, and then to be opened when poking into the soil owing to the shape of said cam 67.

The transmission mechanism of said transplanting tool 34 is as shown above, where the transmission ratio of the gears is as follows. That is, gear 40 : gear 42 = 3:1, gear 39 : gear 44 = 1:1, gear 47 : gear 52 = 1:1, gear 56 : gear 58 = 1:2. This transmission ratio is just one of the examples and when gear 56 : gear 58 = 1:2, if gear 47 : gear 52 is set as 2:1, gear 40 : gear 42 becomes 2;1 and gear 39 : gear 44 becomes 1:1 or when gear 56 : gear 58 is 1:2, if gear 47 : gear 52 is set 1:2, gear 40 : gear 42 should be 5:1 and gear 39 : gear 44 should be 1:1.

According to the transmission mechanism of the transplanting tool 34 in the above example, the first rotary case 32 is rotated by the shaft 43 clockwise, and by contrast, the second rotary case 33 is rotated by the cylindrical shaft 51 counterclockwise, and furthermore, the transplanting tool 34 is rotated by the gear 58 which is subjected to planetary rotation by a sun gear 56 substantially affixed to the first rotary case 32 while deflecting from the second rotation case 33 and keeping almost the same position seen from the side. Accordingly, the first rotary case 32 and the second rotary case 33 are driven by gears in opposing directions, so that the loosening caused by the backlash due to the gear transmission rarely appears and that seedling division by the transplanting tool 34 can be carried out precisely.

Referring now to Fig. 5, a transmission mechanism of the transplanting tool 34 in another example is described herein.

Describing the different points from said example shown in Fig. 3, an outfitted shaft 41a is affixed to a transplanting transmission case 6, which composes a sun gear with its integral gear 47, and moreover to which a planetary gear 52b is installed through a counter gear 52a. A second rotary case 33 is mounted rotatably by a shaft 48a being integral with the planetary gear 52b and a cylindrical shaft 51a to which the shaft 48a is inserted is attached to a first rotary case 32, and on the cylindrical shaft 51a to which the shaft 48a is inserted is attached to a first rotary case 32, and on the cylindrical shaft 51a, furthermore, a gear 56a is mounted as a sun gear. It is constructed so that a planetary gear 58a is driven by the gear 56a through a counter gear 57a, and a transplanting tool 34 is attached to a transplanting tool mounting shaft 59 being integral with the gear 58a.

In this case, the transmission ratio of the gears is set as gear 39 : gear 44 = 1:1, gear 47a : gear 52b = 2:1, and gear 56 : gear 58a = 1:2. Here, also in this embodiment, it is so designed that the first rotary case 32 is rotated clockwise, while the second rotary case 33 is rotated counterclockwise.

In this constitution, it is designed in such a way that the transmission system of the shaft 59 to keep the position of the transplanting tool 34 in a certain state is driven by the sun gear 56a fixed to the first rotary case 32 itself, so that the looseness in action of the transplanting tool 34 can be lessened and that the structure can be simplified.

Here, as shown in Fig. 14, it is preferable to install a mud scraper 100 made of a brush on the end part of base side which is the rotation center side of the second rotary case 33 through a bracket 102 so as to scrape off the mud adhered on the transplanting claw 61. The mud scraper is mounted eccentically on the antirotation direction side of the second rotary case 33, which is so designed as to contact with the transplanting claw on the moving trajectory of the transplanting claw 61.

A seedling press-down mechanism is explained below. An extrusion cam 71 is mounted on the transplanting mounting shaft 59 arranged together with the opening cam 67 in the case 60 of said transplanting tool 34, and the cam 71 is installed on an extrusion driving shaft 72 borne parallel with said shaft 59 so that the extrusion driving shaft 72 rotates normally or reversely depending on the rotation of the cam 71.

An end of extrusion driving shaft 72 is projected from said case 60, and an oscillating fitting 74 is affixed on the projected part of the shaft. A rocker arm 76 is mounted on a bracket 75 being integral with the case 60 on the rear side of the case 60, and furthermore, the base part of an extrusion mounting lever 77 to mount an extruding element is pivoted on said rocker arm 76 while its middle point in the longitudinal direction is pivoted on the oscillating fitting 74 so that the front end side of the extrusion mounting lever 77 is temporaily oscillated vertically.

In consequence, the base part of seedling extruding elements 78, 78 composed of leaf springs as an elastic member is fixed on the tip of the extrusion mounting lever 77, and the tips of the seedling extruding elements 78, 78 composed of leaf springs are so designed as to be always press-fitted on the lower end side of the inner wall of said fixed transplanting claw 61a and the movable transplanting claw 61b; as a result when the claws 61a and 61b are spaced from each other by the action of the movable transplanting claw 61b, the seedling extruding element 78 is simultaneously opened along with is opening, and when shut it is closed in the same way.

85 is a pressure roller to press and even out the surface of a ridge 80 where seedlings are transplanted, which is pivoted rotatably on an arm 86 pivoted on a machine frame, and a spring 87 is interposed between the arm 86 and the machine frame to elastically lower the pressure roller 85. It is so designed that the descending limit position of the pressure roller 85 can be adjusted by an adjusting lever 88 mounted on a handle 7 through a wire 89, and the transplanting depth can be, hence, adjusted.

90 denoted tail wheels installed right and left at the position to straddle the ridge 80 so that its position can be vertically adjusted by the rotation of an adjusting handle.

91 denotes root pressure members to press the surface of the ridge 80 near the root of transplanting seedlings, which are distributed laterally from the lateral center of the ridge 80, and the pressure plate 91a is mounted rotatably on the rear end side of an arm 93 of which longitudinal middle point is pivoted on a pin 92 which is inclined to the machine frame so that the right and left outer sides may direct downward, and the front end side of the arm 93 is interlocked through a rod 96 with an oscillating lever 95 oscillated by a cam 94 attached to said rotary shaft 19, so as to compose a two-motion presser in which the pressure plate 91a lightly presses the surface of the ridge on both sides of the transplanted seedlings at first, and sequentially presses strongly.

97 denotes a spring.

Here, it is acceptable to install a pressure equipment having a root pressure ring 110 as shown in Fig. 12 and Fig. 13 instead of the above tool pressure member 91. The equipment is designed in such a way that pressure rings 110, 110 are supported on a frame 112 affixed on the handle 7, and that the position of seedling A is detected by a position detector 111 such as an ultrasonic sensor and a photoelectric sensor. The root pressure ring 110 is actuated by the action mechanism such as a hydraulic equipment 114 depending on a signal from the detector, the root of seedlings a is hence, pressured. In the equipment shown in the illustrated example, as a pair of position detectors 111 are installed on the right and left, a lateral deflection of the seedling position can be detected by comparing the signals from these sensors by a comparator. The hydraulic equipment 114 is actuated appropriately depending of the detected result, so that the soil of the seedling root can be pressured adequately.

98 is an intrarow spacing marker, which is structured in such a way that, when transplanting error occures, by returning the machine body back to the position above the transplanted seedling, and restarting, the first seedling after the restart is transplanted at the same interval.

Operation of the above example is now explained. After setting the transplanter with its wheels 5, 5 straddling the transplanting ridge in the field, seedlings A in the state of mat with soil or seedling A in the state of pot grown up in a paper-made raising device of seedling in which pot vessels are linked laterally and longitudinally at a certain interval are carried on the seedling table 13, and then, if the rotary parts are driven by an engine 4, the machine body advances by the rotation of the wheels 5, 5.

The seedling table 13 is reciprocally oscillated laterally by the rotation of the lead cam shaft 9 through a lead metal. Accordingly, the seedlings A positioned on the rear end side are laterally moved in the state received by the seedling receiving frame 21, and thus the seedling is let out into the seedling outlet 23.

On the other hand, the shaft 43 is driven by the gear 39 and gear 44 when the shaft 26 is driven from the engine side through a chain 37 and sprocket 38. Then, the first rotary case 32 is rotated clockwise in Fig. 1 by the shaft 43.

The outfitted shaft 41 is driven by the gear 40 and gear 41, and the gear 47 affixed to the outfitted shaft 41 in the rotary case 32 is rotated at a high speed, so that the second rotary case 33 is rotated counterclockwise at a double speed by the gear 52 meshing with the gear 47. On the other hand, the transplanting tool mounting shaft 59 is rotated by the gear 56 of the shaft 48 installed in the first rotary case 32 through the counter gear 57 and the gear 58, and hence, the transplanting tool 34 affixed on the shaft 59 is rotated with deflection in the reverse direction of the rotation direction of the second rotary case 33 at the same speed; as a result the transplanting tool 34 vertically moves without changing its position.

The tip of the transplanting claw 61 attached to said transplanting tool 34 is moved while drawing a closed loop transplanting trajectory P.

In another case shown in Fig. 5, the first and the second rotary cases 32, 33 are rotated in the same way as described above and the action of the transplanting tool is also the same.

The transplanting claw 61 which draws such a transplanting trajectory P enters into the seedling outlet 23 of said seedling receiving frame 21 from the upper side, so that the seedling is pinched between the fixed transplanting claw 61a and the movable transplanting claw 61b.

At the time, the seedling extruding elements 78, 78 stay considerably above the bottom of the transplanting claw 61 in the waiting state, which is operated to the side where the movable transplanting claw 61b closes by the cam 67 and the cam floor 69, so that the seedling A is tightly pinched.

The seedling extruding element 78 abutting against the side of movable transplanting claw 61b is simultaneously operated to the closed side by the operation of the movable transplanting claw 61b.

The transplanting claw 61 is lowered in the state into the soil of the ridge, and at the same time, the movable transplanting claw 61b is opened outward. The pinched seedling A is, hence, substantially released in the soil to be transplanted, but when the adhering force with the transplanting claw 61 is strong, the seedling A is about to be lifted up by the ascent of the transplanting claw 61. At this point, the cam follower 73 is dropped in the step of the cam 71 by the elastic pressure of the spring so that the extrusion driving shaft 72 is rotated. The oscillating fitting 74 is sequentially rotated quickly and the seedling extrusion elements 78, 78 descend quickly through the extrusion mounting lever 77. As a result the inner wall of the transplanting claw 61 is scraped by its tip, and the seedling being about to be lifted up together is, thus, pressed into the soil. In this way, the seedling A can be surely transplanted without being lifted up and at the same time, the inner side of the transplanting claw 61 is cleanly swept so that the seedling can be certainly pinched at the next division of the seedlings.

It is preferable to drill holes 78a, 78a in the seedling extruding elements 78, 78 which prevent the mud from clogging the space with the transplanting claw 61.

As is described above, the surface of the ridge 80 to be transplanted is evened out by the pressure roller 85, and the seedling A is transplanted in a constant depth. Then, after the transplantation, the surface of the ridge around the root is certainly pressured by the root pressure member.

## Claims

1. An apparatus for transplanting seedlings, comprising a supporting arm which is movable in a vertical plane around a rotating shaft, a transplanting tool being mounted on the radially outer end portion of said supporting arm such that, during a rotary motion of said transplanting tool, said seedlings can be taken out of a seedling table and transplanted in the ground, **characterized in that** said supporting arm has a first rotary case (32) mounted on said rotating shaft (43), said first rotary case supporting a second rotary case (33) at its radially outer end portion, said second rotary case (33) rotatably supporting said transplanting tool (34), said first rotary case (32) and said second rotary case (33) being operatively connected to each other via a transmission mechanism (47,48,52,56,57,58) such that said second rotary case (33) rotates in the opposite direction relative to said first rotary case (32) and, when it is directed approximately to the vertical direction, is disposed essentially in the extension of said first rotary case (32) and such that, when said first rotary case (32) is in the longitudinal position, said second rotary case (33) is also essentially longitudinal and extends in the opposite direction to said first rotary case (32).

2. An apparatus for transplanting according to claim 1, **characterized in that** said second rotary case (33) rotates relative to the first rotary case at twice the rotational speed of said first rotary case (32).

3. An apparatus for transplanting according to claim 1 or 2, **characterized in that** said transplanting tool (34) rotates relative to the second rotary case with the same rotational speed as and in the opposite direction relative to said second rotary case (33).

4. An apparatus for transplanting according to anyone of the preceding claims, **characterized in that** a mud scraper (100) to remove the mud adhering to the tip of the transplanting tool (34) is mounted at an appropriately deflected position on the base side and on the antirotation direction side of the second rotary case (33).

## Patentansprüche

1. Vorrichtung zum Einsetzen von Pflänzlingen, die einen in einer vertikalen Ebene um eine Drehwelle bewegbaren Tragarm hat, wobei ein Einsetzwerkzeug am radial äußeren Endabschnitt des Tragarms so montiert ist, daß während einer Drehbewegung des Einsetzwerkzeuges Pflänzlinge einer Pflänzlingtrageplatte entnehmbar und in den Erdboden einsetzbar sind,
dadurch gekennzeichnet, daß der Tragarm ein erstes Rotationsgehäuse (32) hat, das auf der Drehwelle (43) befestigt ist, daß das erste Rotationsgehäuse an seinem radial äußeren Endabschnitt ein zweites Rotationsgehäuse (33) hält, daß das Einsetzwerkzeug (34) am zweiten Rotationsgehäuse (33) drehbar gelagert ist, daß das erste Rotationsgehäuse (32) und das zweite Rotationsgehäuse (33) derart miteinander über einen Getriebemechanismus (47, 48, 52, 56, 57, 58) in Wirkverbindung stehen, daß sich das zweite Rotationsgehäuse (33) in entgegengesetzte Richtung relativ zum ersten Rotationsgehäuse (32) dreht, und, wenn es annähernd in Vertikalrichtung gerichtet ist, es im wesentlichen in der Verlängerung des ersten Rotationsgehäuses (32) angeordnet ist, und daß, wenn das erste Rotationsgehäuse (32) sich in der Längsposition befindet, sich das zweite Rotationsgehäuse (33) ebenfalls im wesentlichen in Längsrichtung befindet und sich in entgegengesetzter Richtung zum ersten Rotationsgehäuse (32) erstreckt.

2. Vorrichtung zum Einsetzen von Pflänzlingen gemäß Anspruch 1, wobei sich das zweite Rotationsgehäuse (33) relativ zum ersten Rotationsgeäuse (32) mit der doppelten Rotationsgeschwindigkeit des ersten Rotationsgehäuses dreht.

3. Vorrichtung zum Einsetzen von Pflänzlingen gemäß Anspruch 1 oder 2, wobei sich das Einsetzwerkzeug (34) relativ zum zweiten Rotationsgehäuse mit der gleichen Rotationsgeschwindigkeit und in entgegengesetzte Richtung relativ zum zweiten Rotationsgehäuse (33) dreht.

4. Vorrichtung zum Einsetzen von Pflänzlingen nach einem der vorangegangenen Ansprüche, wobei ein Schmutzschaber (110), der den an der Spitze des Einsetzwerkzeuges (34) anhaftenden Schmutz entfernt, an geeignet geformter Position auf der Grundseite und auf in gegenläufiger Richtung rotierender Seite des zweiten Rotationsgehäuses montiert ist.

## Revendications

1. Dispositif pour transplanter de jeunes plants, comprenant un bras support déplaçable dans un plan vertical autour d'un arbre tournant, un outil de transplantation monté sur la partie d'extrémité radialement extérieure dudit bras support, de manière que, lors d'un mouvement de rotation dudit outil de transplantation, lesdits jeunes plants puissent être prélevés d'une table à jeunes plants et transplantés dans le sol, caractérisé ce que ledit bras support comporte un premier carter tournant (32) monté sur ledit arbre tournant (43), ledit premier carter tournant supportant un second carter tournant (33) sur sa partie d'extrémité radialement extérieure, ledit second carter tournant (33) supportant, de façon à lui permettre de tourner, ledit outil de transplantation (34), ledit premier carter tournant (32) et ledit second carter tournant (33) étant reliés fonctionnellement l'un à l'autre par l'intermédiaire d'un mécanisme de transmission (47, 48, 52, 56, 57, 58), de manière que ledit carter tournant (33) tourne dans le sens opposé par rapport à la rotation dudit premier carter tournant (32) et, une fois orienté à peu près dans la direction verticale, soit disposé pratiquement dans le prolongement dudit premier carter tournant (32), de manière, que lorsque ledit premier carter tournant (32) est en position longitudinale, ledit second carter tournant (33) est également pratiquement longitudinal et s'étend dans la direction opposée audit premier carter tournant (32).

2. Dispositif de transplantation selon la revendication 1, caractérisé ce que ledit second carter tournant (33) tourne par rapport au premier carter tournant à une vitesse de rotation double de celle dudit premier carter tournant (32).

3. Dispositif de transplantation selon la revendication 1 ou 2, caractérisé ce que ledit outil de transplantation (34) tourne par rapport au second carter tournant, à la même vitesse de rotation que ledit second carter tournant (33) et dans un sens opposé par rapport à ce dernier.

4. Dispositif de transplantation selon l'une quelconques des revendications précédentes caractérisé en ce qu'un racleur à boue (100), destiné à enlever la boue adhérant au bout de l'outil de transplantation (34), est monté en une position décalée de manière appropriée sur le côté de base et dans la direction opposée au sens de rotation dudit second carter tournant (33).
